# EUROPÄISCHE PATENTANMELDUNG

(11) **EP 3 723 254 A1**
(43) Veröffentlichungstag der Anmeldung: **14.10.2020**
(21) Anmeldenummer: 19168372.1
(22) Anmeldetag: 10.04.2019
(51) Int. Cl.: H02M 1/40, H02M 7/06, H02M 7/155, H02M 1/14, H02M 1/12, H02M 7/17, H02M 7/23, H01F 29/14

(54) **SCHALTUNGSANORDNUNG, ELEKTROLYSEEINRICHTUNG UND VERFAHREN ZUM BETRIEB EINER SCHALTUNGSANORDNUNG ODER EINER ELEKTROLYSEEINRICHTUNG**

(71) Anmelder: Siemens Aktiengesellschaft, 80333 München (DE)
(72) Erfinder: Utz, Peter, 90762 Fürth (DE)

(57) **Zusammenfassung**

Schaltungsanordnung, umfassend wenigstens eine Spulenanordnung (1) mit einer ersten Spule (2) und einer zweiten Spule (3), wobei die erste Spule (2) mit einer Gleichspannungsseite eines Gleichrichters (8) der Schaltungsanordnung (7) verbunden ist und die zweite Spule (3) mit einer Stromquelle (12) der Schaltungsanordnung (7) verbunden ist, wobei die erste Spule (2) und die zweite Spule (3) über ein jeweils einen Kern der Spulen (2, 3) bildendes Koppelbauteil (4) der Spulenanordnung (1) miteinander gekoppelt sind.

## Beschreibung

Die Erfindung betrifft eine Schaltungsanordnung, umfassend wenigstens eine Spulenanordnung mit einer ersten Spule und einer zweiten Spule, wobei die erste Spule mit einer Gleichspannungsseite eines Gleichrichters der Schaltungsanordnung verbunden ist und die zweite Spule mit einer Stromquelle der Schaltungsanordnung verbunden ist. Weiterhin betrifft die Erfindung eine Elektrolyseeinrichtung sowie ein Verfahren zum Betrieb einer Schaltungsanordnung oder einer Elektrolyseeinrichtung.

Chemische Elektrolysen wie Wasserstoffelektrolysen werden über mit Gleichstrom betriebene Elektrolyseure umgesetzt. Bei im industriellen Maßstab ausgeführten Elektrolysen wird der Gleichstrom beispielsweise über netzgeführte Gleichrichter bereitgestellt. Bei dieser Gleichrichtung einer netzseitigen Wechselspannung können aufgrund der Funktionsweise der Gleichrichter Oberschwingungen entstehen, welche das Wechselstromnetz und/oder das Gleichstromnetz belasten können. Eine Möglichkeit zur Reduzierung dieser Belastung kann beispielsweise durch eine höherpulsige Anlage erreicht werden, bei welcher zur Erzeugung des Gleichstroms mehrere Gleichrichter bezogen auf die Netzspannung jeweils mit einem Phasenversatz betrieben werden. Dies kann jedoch zu Problemen auf der Gleichstromseite führen, da die Momentanwerte der erzeugten Gleichspannungen der einzelnen Gleichrichter unterschiedlich sein und somit zwischen den Gleichrichtern Kreisströme fließen können. Um dieses Problem zu beheben, kann einerseits zwischen beiden Gleichrichtern eine Gleichstromsaugdrossel verwendet werden, oder mehrere Gleichstromdrosseln.

Zur Vermeidung von Oberschwingungen auf der Gleichstromseite ist weiterhin der Einsatz einer oder mehrerer Gleichstromdrosseln bekannt. Eine derartige Gleichstromdrossel kann beispielsweise in jedem jeweils einen Gleichrichter umfassenden Gleichstromsystem eingesetzt werden. Der Einsatz einer Gleichstromdrossel pro Gleichstromsystem hat den Nachteil, dass die Spulen jeweils einen großen Eisenanteil benötigen, da der Eisenkreis der Gleichstromdrosseln komplett von dem zum Betrieb der Elektrolyseure erzeugten Gleichstrom vorgesättigt wird. Weiterhin fällt die benötigte Eisenmenge für jede Gleichstromdrossel bzw. für jeden eingesetzten Gleichrichter an.

Eine zwischen zwei Gleichstromsysteme geschaltete Saugdrossel kann ebenfalls sehr groß werden, da aufgrund des Phasenversatzes zwischen den beiden Gleichrichtern die Gleichstromsaugdrossel die Differenzspannung zwischen den beiden Gleichstromsystemen aufnehmen muss. Weiterhin können in Abhängigkeit der Pulsigkeit der Anlage mehrere Saugdrosseln für unterschiedliche Frequenzen notwendig sein, um auch eine hinreichende Filterung von Oberschwingungen zu erreichen. Auch in diesem Fall benötigen die eingesetzten Saugdrosseln jeweils einen großen Eisenkern. Aufgrund der für einen industriellen Elektrolyseeinsatz erforderlichen, hohen Stromstärken des Gleichstroms werden erhebliche Anforderungen an die eingesetzten Saugdrosseln bzw. Gleichstromdrosseln gestellt, was insbesondere mit einer erheblichen Größe des Eisenkerns und somit auch mit einer erheblichen Baugröße, einem erheblichen Gewicht sowie hohen Kosten der Drosseln verbunden ist.

Der Erfindung liegt daher die Aufgabe zugrunde, eine Schaltungsanordnung anzugeben, durch welche ein Bedarf an Eisen für eine Gelichstromdrossel reduziert werden kann.

Zur Lösung dieser Aufgabe ist bei einer Schaltungsanordnung der eingangs genannten Art erfindungsgemäß vorgesehen, dass die erste Spule und die zweite Spule über ein jeweils einen Kern der Spulen bildendes Koppelbauteil der Spulenanordnung miteinander gekoppelt sind.

Die mit der Gleichspannungsseite des Gleichspannungsrichters der Schaltungsanordnung verbundene erste Spule wird dabei als eine Gleichstromdrossel zur Glättung des Gleichstroms beziehungsweise als eine Glättungseinrichtung zur Glättung des Gleichstroms bzw. Dämpfung von den Gleichstrom überlagernden Oberschwingungen eingesetzt. Die über das Koppelbauteil als gemeinsamen Kern mit der ersten Spule gekoppelte zweite Spule kann bei entsprechender Bestromung als eine Kompensationsspule wirken, so dass ein von der zweiten Spule erzeugter magnetischer Fluss dem von der ersten Spule, welche den durch den Gleichrichter erzeugten Gleichstrom führt, erzeugten magnetischen Fluss innerhalb des gemeinsamen Koppelelements entgegenwirkt. Dies bewirkt eine vollständige oder zumindest teilweise Kompensation des von der ersten Spule erzeugten magnetischen Flusses. Die Menge an Eisen innerhalb der ersten Spule kann aufgrund dieser Kompensation reduziert werden, ohne dass die zur Glättung des Gleichstroms erforderliche Induktivität der Spule reduziert wird. Auf diese Weise kann trotz des reduzierten Eisenanteils innerhalb der ersten Spule die Glättung des Gleichstroms (beziehungsweise die Dämpfung der Oberschwingungen) erfolgen.

Das die erste Spule und die zweite Spule miteinander koppelnde Koppelbauteil bildet jeweils einen Kern der Spulen beziehungsweise einen Spulenkern der ersten Spule und einen Spulenkern der zweiten Spule. Dazu kann sich das Koppelbauteil zumindest teilweise innerhalb der Windungen der ersten Spule und der Windungen der zweiten Spule erstrecken. Die über das Koppelbauteil erzeugte Koppelung zwischen den Spulen ist dabei eine magnetische Kopplung, so dass bei einem Betrieb der Schaltungsanordnung ein von der zweiten Spule erzeugter magnetischer Fluss dem von der ersten Spule erzeugten magnetischen Fluss innerhalb des Koppelelements entgegenwirken kann.

Zur Erzeugung des magnetischen Flusses innerhalb der zweiten Spule ist diese mit einer Stromquelle der Schaltungsanordnung verbunden. Die Stromquelle kann dabei eine Gleichstromquelle sein, welche aufgrund der Funktion der zweiten Spule auch als Kompensationsstromquelle bezeichnet werden kann. Statt der Kompensationsstromquelle und der zweiten Spule ist grundsätzlich auch der Einsatz eines Permanentmagneten möglich. Der Einsatz der mit der Stromquelle verbundenen zweiten Spule ermöglicht jedoch vorteilhaft ein Einstellen eines die zweite Spule speisenden Gleichstroms, so dass verschiedene Stärken des von der zweiten Spule erzeugten magnetischen Flusses bzw. verschiedene Stärken der Kompensation erreicht werden können.

Erfindungsgemäß kann vorgesehen sein, dass das Koppelbauteil ein insbesondere jochartig ausgebildeter Eisenkern ist. Durch die Ausbildung des Koppelbauteils als Eisenkern wird eine magnetische Kopplung der ersten Spule und der zweiten Spule ermöglicht. Das als Eisenkern ausgebildete Koppelbauteil kann einteilig oder mehrteilig sein. Eine jochartige Ausbildung des Eisenkerns ermöglicht dabei, dass die erste Spule und die zweite Spule jeweils auf einem Schenkel des Koppelbauteils angeordnet sind. Um den Zusammenbau der Spulenanordnung der Schaltungsanordnung zu erleichtern, kann insbesondere vorgesehen sein, dass das Koppelbauteil ein U-förmiges oder im Wesentlichen U-förmiges Element und ein I-förmiges oder im Wesentlichen I-förmiges Element umfasst. Die Elemente können zu einer Jochform zusammengesetzt werden, indem das I-förmige Element auf der Öffnung des U-förmigen Elements derart angeordnet wird, dass sich ein geschlossenes Joch des Koppelbauteils ergibt.

Das erfindungsgemäße Vorsehen der Kompensation ermöglicht es, die Menge an Eisen deutlich zu reduzieren, insbesondere weniger Eisen zu verwenden, als zur Vermeidung einer Sättigung ohne Berücksichtigung des Kompensationsflusses nötig wäre. So kann mithin vorgesehen sein, dass die Menge an Eisen des jochartig ausgebildeten Eisenkerns geringer, insbesondere als weniger als die Hälfte, als die zur kompletten Sättigung des Spulenkerns der ersten Spule durch den durch den Gleichrichter maximal erzeugten, durch die erste Spule fließenden Gleichstrom erzeugten magnetischen Flusses ohne Berücksichtigung eines durch die zweite Spule erzeugten magnetischen Flusses gewählt ist.

Für die Spulenanordnung kann erfindungsgemäß vorgesehen sein, dass die zweite Spule der Spulenanordnung eine höhere Windungszahl als die erste Spule der Spulenanordnung aufweist. Dies hat den Vorteil, dass der Strom durch die zweite Spule zur Kompensation des von dem durch die erste Spule fließenden Strom erzeugten magnetischen Flusses kleiner als der Strom durch die erste Spule sein kann. Da insbesondere bei Schaltungsanordnungen, welche zum Betrieb von im industriellen Maßstab eingesetzten Elektrolyseuren dienen, sehr hohe Gleichströme durch die erste Spule fließen können, kann durch die Erhöhung der Windungszahl bzw. der Anzahl der Windungen der zweiten Spule in die zweite Spule ein Gleichstrom mit geringerer Stromstärke eingespeist werden. Beispielsweise können die ersten Spulen jeweils für Gleichströme mit einer Stromstärke zwischen 100 A und 1 kA ausgebildet sein.

Erfindungsgemäß kann vorgesehen sein, dass die Schaltungsanordnung mehrere Gleichrichter und mehrere Spulenanordnungen umfasst, wobei die ersten Spulen der Spulenanordnungen jeweils mit einem anderen der Gleichrichter verbunden sind. Dabei kann insbesondere jeder der Gleichrichter der Schaltungsanordnung jeweils mit einer ersten Spule einer der Spulenanordnungen verbunden sein, vorteilhaft ist also für jeden Gleichrichter eine Spulenanordnung vorhanden. Durch die ersten Spulen der Spulenanordnungen kann somit beispielsweise bei einem parallelen Betrieb der Gleichrichter eine Glättung der erzeugten Gleichströme vorgenommen werden.

Weiterhin kann erfindungsgemäß vorgesehen sein, dass die zweiten Spulen der Spulenanordnung gemeinsam, insbesondere in einer Reihenschaltung, mit der Stromquelle verbunden sind. Dies ermöglicht es, dass bei mehreren, parallel betriebenen und jeweils mit einer ersten Spule verbundenen Gleichrichtern die zweiten Spulen aller Spulenanordnungen gemeinsam über die Stromquelle gespeist werden können. Bei einer Reihenschaltung der zweiten Spulen fließt dabei der von der Stromquelle erzeugte Kompensationsstrom durch alle zweiten Spulen und dient dort zur Erzeugung des zur Kompensation eingesetzten magnetischen Flusses. Auf diese Weise kann der Strombedarf der erfindungsgemäßen Schaltungsanordnung vorteilhaft reduziert werden. Die Verhältnis zwischen der Windungszahl der ersten Spule und der Windungszahl der zweiten Spule kann dabei für die Spulenanordnungen gleich oder unterschiedlich sein. Im Falle von mit gleicher Ausgangsstromstärke betriebenen Gleichrichtern können die Windungszahlen und/oder die Verhältnisse der Windungszahlen für die Spulenanordnungen jeweils gleich sein. Werden die Gleichrichter mit unterschiedlichen Ausgangstromstärken betrieben, so können die Windungsverhältnisse der Spulenanordnungen unterschiedlich sein, so dass mit dem Kompensationsstrom durch die zweiten Spulen jeweils eine Kompensation des durch den Strom in der ersten Spule erzeugten magnetischen Flusses erzeugt werden kann.

Erfindungsgemäß kann vorgesehen sein, dass die Stromquelle regelbar und insbesondere als Gleichrichter ausgebildet ist und/oder dass der oder die Gleichrichter regelbar und/oder als Dreiphasengleichrichter, insbesondere als B6-Brückengleichrichter, ausgebildet ist oder sind. Durch die Regelbarkeit der Stromquelle kann auch der von der zweiten Spule beziehungsweise den zweiten Spulen jeweils erzeugte magnetische Fluss geregelt werden, so dass die Kompensationsfunktion der zweiten Spule an einen aktuellen Betrieb des oder der Gleichrichter angepasst werden kann. Eine als Gleichrichter ausgebildete Stromquelle kann beispielsweise über dasselbe Stromnetz gespeist werden wie der oder die Gleichrichter der Schaltungsanordnung. Eine Regelbarkeit des oder der Gleichrichter, welche vorteilhaft als Dreiphasengleichrichter beziehungsweise als B6-Brückengleichrichter ausgebildet sind, ermöglicht es, den über den oder die Gleichrichter erzeugten Gesamtstrom einzustellen und somit beispielsweise den Betrieb einer mit der Schaltungsanordnung verbundenen Elektrolyseeinrichtung zu steuern.

In einer bevorzugten Ausgestaltung der Erfindung kann vorgesehen sein, dass der oder die Gleichrichter wechselspannungsseitig jeweils mit einer Sekundärwicklung wenigstens eines Transformators der Schaltungsanordnung verbunden ist oder sind. Bei einer Schaltungsanordnung, welche mehrere Gleichrichter umfasst, kann insbesondere ein Phasenversatz bezogen auf die wechselspannungsseitig eingespeiste Wechselspannung zwischen den Sekundärwicklungen bestehen. Die Anzahl der bezogen auf eine Periode der wechselspannungsseitig eingespeisten Wechselspannung phasenversetzt betriebenen Sekundärwicklungen bestimmt dabei die Pulsigkeit der Schaltungsanordnung. Die Transformatoren können beispielsweise eine primärseitig beziehungsweise wechselspannungsseitig eingespeiste dreiphasige Spannung, insbesondere eine Mittelspannung oder Hochspannung eines Stromnetzes, in eine an den Sekundärwicklungen anliegende dreiphasige Wechselspannung mit niedrigerer Spannung transformieren. Diese an den Sekundärwicklungen anliegende dreiphasige Wechselspannung kann anschließend über den mit der jeweiligen Sekundärwicklung verbundenen Gleichrichter in eine Gleichspannung gewandelt werden beziehungsweise kann ein entsprechender über die Sekundärwicklungen abgegebener dreiphasiger Wechselstrom über die Gleichrichter in einen Gleichstrom gewandelt werden.

Für eine erfindungsgemäße Elektrolyseeinrichtung ist vorgesehen, dass sie eine erfindungsgemäße Schaltungsanordnung umfasst, wobei die erste Spule oder die ersten Spulen der Schaltungsanordnung mit wenigstens einem Elektrolyseur der Elektrolyseeinrichtung verbunden sind. Dabei können beispielsweise die ersten Spulen mehrerer Spulenanordnungen der Schaltungsanordnung zum Erreichen einer hohen Gesamtstromstärke zum Betrieb des wenigstens einen Elektrolyseurs parallel geschaltet werden. Beispielsweise können die ersten Spulen jeweils für Gleichströme mit einer Stromstärke zwischen 100 A und 1 kA ausgebildet sein, wobei sich der Gesamtstrom somit aus der Summe der jeweils durch die ersten Spulen fließenden Ströme ergibt.

Sämtliche vorangehend für die erfindungsgemäße Schaltungsanordnung beschriebenen Vorteile und Ausgestaltungen treffen entsprechend auf die erfindungsgemäße Elektrolyseeinrichtung zu.

Für ein erfindungsgemäßes Verfahren zum Betrieb einer erfindungsgemäßen Schaltungsanordnung oder einer erfindungsgemäßen Elektrolyseeinrichtung ist vorgesehen, dass die erste Spule und die zweite Spule der wenigstens einen Spulenanordnung derart bestromt werden, dass der von der zweiten Spule erzeugte magnetische Fluss dem von der ersten Spule erzeugten magnetischen Fluss zumindest innerhalb des gemeinsamen Koppelelements entgegenwirkt. Dadurch kann eine vollständige oder zumindest teilweise Kompensation des von der ersten Spule erzeugten magnetischen Flusses in dem als Spulenkern der ersten Spule wirkenden Abschnitts des Koppelelements erreicht werden. Wenn durch die erste Spule ein Strom mit der Stromstärke I₁ fließt und die erste Spule n Windungen und die zweite Spule m Windungen umfasst, so kann für den durch die zweite Spule fließenden Strom eine Stromstärke I₂ = I₁ · (n / m) eingestellt werden, wobei die Stromrichtungen von I₁ und I₂ derart gewählt werden, dass der von der zweiten Spule erzeugte magnetische Fluss dem von der ersten Spule erzeugten magnetischen Fluss zumindest innerhalb des gemeinsamen Koppelelements entgegenwirkt.

Erfindungsgemäß kann vorgesehen sein, dass ein von dem oder den Gleichrichtern erzeugter Nutzgleichstrom sowie ein von der Stromquelle erzeugter Kompensationsgleichstrom anhand einer gemeinsamen relativen Sollstromvorgabe geregelt werden.

Die Sollstromvorgabe kann dabei z. B. ein Wert zwischen 0 %, welcher einem ausgeschalteten Zustand der Schaltungsanordnung entspricht, und 100 %, was einer maximalen Gleichstromabgabe durch die Schaltungsanordnung entspricht, liegen. Bei einem konstanten Windungsverhältnis zwischen den Windungen n der ersten Spule und den Windungen m der zweiten Spulen der wenigsten einen Spulenanordnung ist der jeweils erzeugte magnetische Fluss direkt proportional zu den entsprechenden Stromstärken des Nutzstroms bzw. des Kompensationsstroms, so dass vorteilhaft eine einfache Regelbarkeit sowohl der Gleichrichter als auch der Stromquelle der Schaltungsanordnung ermöglicht wird.

Sämtliche vorangehend in Bezug zur erfindungsgemäßen Schaltungsanordnung und zur erfindungsgemäßen Elektrolyseeinrichtung beschriebenen Vorteile und Ausgestaltungen gelten entsprechend auch für das erfindungsgemäße Verfahren.

Weitere Vorteile und Einzelheiten der Erfindung ergeben sich aus den Zeichnungen. Diese sind schematische Darstellungen und zeigen:
- Fig. 1: eine Spulenanordnung einer erfindungsgemäßen Schaltungsanordnung, und
- Fig. 2: ein Schaltbild einer erfindungsgemäßen Elektrolyseeinrichtung.

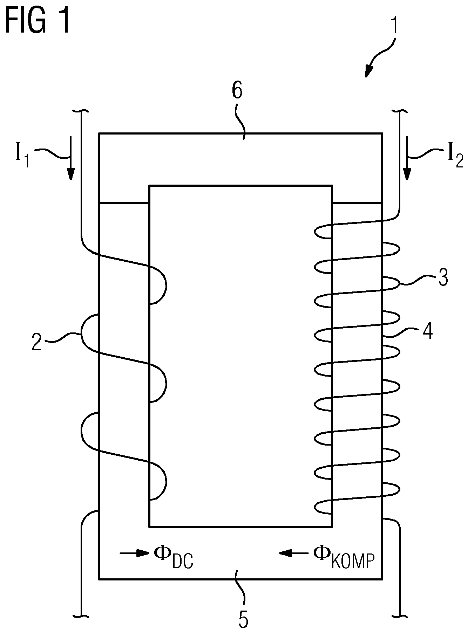

In Fig. 1 ist eine Spulenanordnung 1 einer erfindungsgemäßen Schaltungsanordnung dargestellt. Die Spulenanordnung 1 umfasst eine erste Spule 2 sowie eine zweite Spule 3. Weiterhin umfasst die Spulenanordnung 1 ein Koppelbauteil 4. Das Koppelbauteil 4 umfasst ein U-förmiges Element 5 sowie ein im Wesentlichen I-förmiges Element 6, welches derart auf dem U-förmigen Element 5 angeordnet ist, dass sich eine jochartige Gesamtform des Koppelbauteils 4 ergibt. Über das Koppelbauteil 4 ist die erste Spule 2 mit der zweiten Spule 3 gekoppelt. Weiterhin bildet das Koppelbauteil 4 jeweils einen Kern der ersten Spule 2 sowie der zweiten Spule 3.

Die erste Spule 2 weist n Windungen auf und die zweite Spule 3 umfasst m Windungen. Die dargestellte Anzahl der Windungen der ersten Spule 2 sowie der zweiten Spule 3 sind beispielhaft und rein schematisch zu verstehen. Die erste Spule 2 kann beispielsweise für Gleichströme mit einer Stromstärke zwischen 100 A und 1 kA ausgebildet sein, die zweite Spule 3 kann entsprechend des Windungsverhältnisses n/m auch für geringere Stromstärken ausgebildet sein.

Aufgrund der Kopplung der ersten Spule 2 mit der zweiten Spule 3 über das Koppelbauteil 4 kann ein durch den durch die erste Spule 2 fließenden Strom I₁ erzeugter magnetischer Fluss Φ_{DC} im Koppelbauteil 4 ganz oder teilweise durch den magnetischen Fluss Φ_{KOMP}, welcher durch den die zweite Spule 3 durchströmenden Strom I₂ erzeugt wird, kompensiert werden. Diese Kompensation ermöglicht es, die Eisenmenge im Inneren der ersten Spule 2 vorteilhaft zu reduzieren, ohne ihre Eigenschaften bezüglich einer Glättung des Stromes I₁ nennenswert zu beeinflussen.

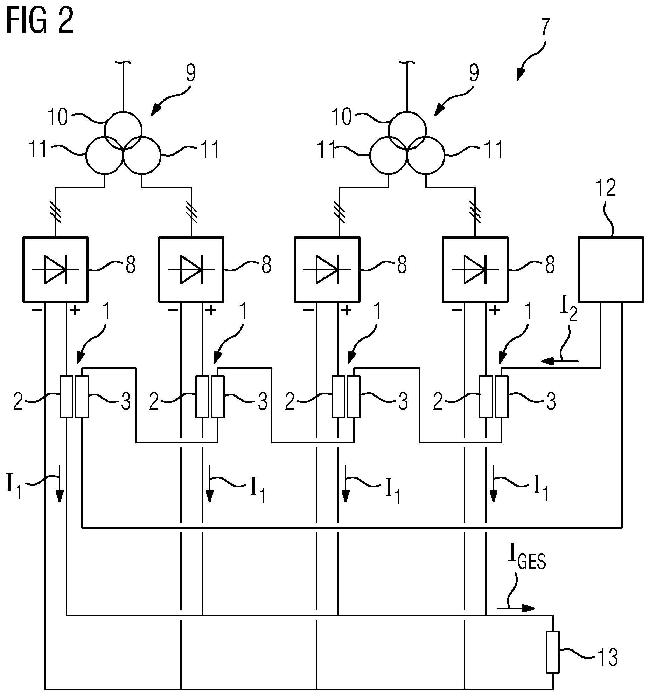

In Fig. 2 ist eine erfindungsgemäße Schaltungsanordnung 7 dargestellt. Die Schaltungsanordnung 7 umfasst vier Spulenanordnungen 1 und vier Gleichrichter 8. Die ersten Spulen der Spulenanordnungen 1 sind dabei jeweils mit der Gleichspannungsseite eines der Gleichrichter 8 verbunden. Die Schaltungsanordnung 7 umfasst weiterhin zwei Transformatoren 9, welche jeweils eine Primärwicklung 10 sowie zwei Sekundärwicklungen 11 aufweisen. Die Primärwicklungen 10 der Transformatoren 9 sind dabei beispielsweise mit einem Stromnetz, z. B. einem Mittelspannungsnetz oder einem Hochspannungsnetz, verbunden. Die Sekundärwicklungen 11 jedes Transformators 9 können jeweils zueinander einen Phasenversatz, beispielsweise von 30°, aufweisen. Weiterhin können die Transformatoren 9 derart betrieben werden, dass die Primärwicklungen 10 zueinander einen Phasenversatz von 15° aufweisen, so dass sich insgesamt eine Pulsigkeit von 24 der dargestellten Schaltungsanordnung 7 ergibt.

Der von den Sekundärwicklungen 11 abgegebene dreiphasige Wechselstrom wird von den Gleichrichtern 8 in einen Gleichstrom gewandelt, welcher jeweils als ein Strom I₁ durch eine erste Spule 2 der Spulenanordnungen 1 fließt. Durch die als Gleichstromdrosseln wirkenden ersten Spulen 2 der Spulenanordnungen 1 erfolgt jeweils eine Glättung der Ströme I₁ beziehungsweise des sich aus der Summe der Ströme I₁ ergebenden Gesamtgleichstroms I_{GES}. Der durch die ersten Spulen 2 aufgrund der Ströme I₁ erzeugte magnetische Fluss im Koppelelement 4 kann ganz oder teilweise durch den durch die zweiten Spulen 3 der Spulenanordnungen 1 fließenden Strom I₂ kompensiert werden. Die zweiten Spulen 3 der Spulenanordnungen 1 sind in Reihe geschaltet und mit einer den Strom I₂ erzeugenden Stromquelle 12 verbunden.

Die Schaltungsanordnung 7 kann Bestandteil einer wenigstens einen Elektrolyseur 13 umfassenden Elektrolyseeinrichtung sein, wobei der wenigstens eine Elektrolyseur 13 durch den sich als Summe der Ströme I₁ ergebenden Gesamtgleichstrom I_{GES} gespeist wird.

Im Falle gleichgroßer Ströme I₁ kann in den Spulenanordnungen 4 jeweils das gleiche Windungsverhältnis n zu m der Windungen der ersten Spule n und der zweiten Spule m verwendet werden. Auf diese Weise wird durch den durch alle zweiten Spulen 3 fließenden Strom I₂ durch die Spulenanordnungen 1 jeweils die gleiche Kompensation des durch die jeweiligen ersten Spulen 2 erzeugten magnetischen Flusses Φ_{DC} erreicht. Die ganze oder teilweise Kompensation des magnetischen Flusses Φ_{DC} durch den magnetischen Fluss Φ_{KOMP}, welcher jeweils durch den durch die in Reihe geschalteten zweiten Spulen 3 fließenden Strom I₂ erzeugt wird, ermöglicht eine Reduktion des Eisenanteils in den jeweiligen ersten Spulen 2 bei Beibehaltung ihrer Induktivität, so dass bei der Glättung des durch die Gleichrichter 8 jeweils erzeugten Gleichstroms I₁ beziehungsweise des gesamten Stroms I_{GES} trotz des reduzierten Eisenanteils in den ersten Spulen 2 keine negativen Effekte auftreten.

Bei einem Betrieb der Schaltungsanordnung 7 bzw. einer die Schaltungsanordnung 7 umfassenden Elektrolyseeinrichtung mit einem erfindungsgemäßen Verfahren werden die Vorzeichen der Ströme I₁ und I₂ derart gewählt, dass die ersten Spulen 2 und die zweiten Spulen 3 der Spulenanordnungen 1 derart bestromt werden, dass der von den zweiten Spulen 3 jeweils erzeugte magnetische Fluss dem von den ersten Spulen 2 jeweils erzeugten magnetischen Fluss zumindest innerhalb des jeweils gemeinsamen Koppelelements 4 entgegenwirkt. Der von den Gleichrichtern 8 erzeugte Nutzgleichstrom I_{GES} sowie der von der Stromquelle 12 erzeugte Kompensationsstrom I₂ sind bei jeweils gleichen Windungsverhältnissen n zu m proportional zueinander, so dass sowohl die Kompensation durch den Strom I₂ als auch die Stromstärke des Nutzgleichstroms beziehungsweise des Gesamtgleichstroms I_{GES} anhand einer relativen Sollstromvorgabe gemeinsam geregelt werden können. Die Sollstromvorgabe kann dabei z. B. ein Wert zwischen 0 %, welcher einem ausgeschalteten Zustand der Schaltungsanordnung entspricht, und 100 %, was einer maximalen Gleichstromabgabe durch die Schaltungsanordnung entspricht, liegen.

Die Gleichrichter 8 sind als Dreiphasengleichrichter ausgebildet. Beispielsweise können die Gleichrichter 8 als B6-Brückengleichrichter ausgebildet sein. Die Stromquelle 12 kann ebenfalls als ein Gleichrichter ausgeführt sein. Beispielsweise kann die Stromquelle 12 auch über das Stromnetz, welches mit den Primärwicklungen 10 der Transformatoren 9 verbunden ist, gespeist werden. Sowohl die Gleichrichter 8 als auch die Stromquelle 12 können regelbar ausgeführt sein.

Die Darstellung der Schaltungsanordnung 7 mit vier Gleichrichtern 8 ist rein beispielhaft. Es können auch eine andere Zahl von Gleichrichtern 8 und/oder eine andere Zahl von Transformatoren 9 eingesetzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Spulenanordnung
- 2: erste Spule
- 3: zweite Spule
- 4: Koppelbauteil
- 5: U-förmiges Element
- 6: I-förmiges Element
- 7: Schaltungsanordnung
- 8: Gleichrichter
- 9: Transformator
- 10: Primärwicklung
- 11: Sekundärwicklung
- 12: Stromquelle
- 13: Elektrolyseur

## Patentansprüche

1. Schaltungsanordnung, umfassend wenigstens eine Spulenanordnung (1) mit einer ersten Spule (2) und einer zweiten Spule (3), wobei die erste Spule (2) mit einer Gleichspannungsseite eines Gleichrichters (8) der Schaltungsanordnung (7) verbunden ist und die zweite Spule (3) mit einer Stromquelle (12) der Schaltungsanordnung (7) verbunden ist, wobei die erste Spule (2) und die zweite Spule (3) über ein jeweils einen Kern der Spulen (2, 3) bildendes Koppelbauteil (4) der Spulenanordnung (1) miteinander gekoppelt sind.

2. Schaltungsanordnung nach Anspruch 1, **dadurch gekennzeichnet, dass** das Koppelbauteil (4) ein insbesondere jochartig ausgebildeter Eisenkern ist.

3. Schaltungsanordnung nach Anspruch 1 oder 2, **dadurch gekennzeichnet, dass** die zweite Spule (3) der Spulenanordnung (1) eine höhere Windungszahl als die erste Spule (2) der Spulenanordnung (1) aufweist.

4. Schaltungsanordnung nach einem der vorangehenden Ansprüche, **dadurch gekennzeichnet, dass** sie mehrere Gleichrichter (8) und mehrere Spulenanordnungen (1) umfasst, wobei die ersten Spulen (2) der Spulenanordnungen (3) jeweils mit einem anderen der Gleichrichter (8) verbunden sind.

5. Schaltungsanordnung nach Anspruch 4, **dadurch gekennzeichnet, dass** die zweiten Spulen (3) der Spulenanordnungen (1) gemeinsam, insbesondere in einer Reihenschaltung, mit der Stromquelle (12) verbunden sind.

6. Schaltungsanordnung nach einem der vorangehenden Ansprüche, **dadurch gekennzeichnet, dass** die Stromquelle (12) regelbar und insbesondere als Gleichrichter ausgebildet ist und/oder dass der oder die Gleichrichter (8) regelbar und/oder als Dreiphasengleichrichter, insbesondere als B6-Brückengleichrichter, ausgebildet ist oder sind.

7. Schaltungsanordnung nach einem der vorangehenden Ansprüche, **dadurch gekennzeichnet, dass** der oder die Gleichrichter (8) wechselspannungsseitig jeweils mit einer Sekundärwicklung (11) wenigstens eines Transformators (9) der Schaltungsanordnung (7) verbunden ist oder sind.

8. Elektrolyseeinrichtung umfassend eine Schaltungsanordnung (7) nach einem der vorangehenden Ansprüche, **dadurch gekennzeichnet, dass** die erste Spule (2) oder die ersten Spulen (2) der Schaltungsanordnung (7) mit wenigstens einem Elektrolyseur (13) der Elektrolyseeinrichtung verbunden sind.

9. Verfahren zum Betrieb einer Schaltungsanordnung (7) nach einem der Ansprüche 1 bis 7 oder einer Elektrolyseeinrichtung nach Anspruch 8, **dadurch gekennzeichnet, dass** die erste Spule (2) und die zweite Spule (3) der wenigstens einen Spulenanordnung (1) derart bestromt werden, dass der von der zweiten Spule (3) erzeugte magnetische Fluss dem von der ersten Spule (2) erzeugten magnetischen Fluss zumindest innerhalb des gemeinsamen Koppelelements (4) entgegenwirkt.

10. Verfahren nach Anspruch 9, **dadurch gekennzeichnet, dass** ein von dem oder den Gleichrichtern (8) erzeugter Nutzgleichstrom sowie ein von der Stromquelle (12) erzeugter Kompensationsgleichstrom anhand einer gemeinsamen relativen Sollstromvorgabe geregelt werden.
